(19) Europäisches Patentamt
European Patent Office
Office européen des brevets

(11) **EP 4 708 958 A1**

(12) **EUROPEAN PATENT APPLICATION**
published in accordance with Art. 153(4) EPC

(43) Date of publication:
**11.03.2026 Bulletin 2026/11**

(51) International Patent Classification (IPC):
***H04W 28/14*** *(2009.01)*

(21) Application number: **24940899.8**

(52) Cooperative Patent Classification (CPC):
**H04L 5/00; H04W 28/14**

(22) Date of filing: **01.11.2024**

(86) International application number:
**PCT/CN2024/129244**

(87) International publication number:
**WO 2026/000753 (02.01.2026 Gazette 2026/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.06.2024 CN 202410871331**

(71) Applicant: **Chongqing Satellite Network System
Co., Ltd.
Chongqing 401135 (CN)**

(72) Inventor: **DENG, Yuance
Chongqing 401135 (CN)**

(74) Representative: **Habermann, Hruschka &
Schnabel
Patentanwälte
Montgelasstraße 2
81679 München (DE)**

(54) **BUFFER DATA STATUS REPORTING AND RECEIVING METHODS AND RELATED APPARATUSES**

(57) The present disclosure relates to the technical field of communication, and particularly to a method for reporting and reporting a buffer status, and related apparatuses. In this embodiment, the method includes: determining buffer status information to be reported; generating first adjustment information related to first information based on the buffer status information, and the first information is sent by a network device to the terminal device; generating second information based on a reception status of the first information and the first adjustment information; and sending the second information to the network device. In this way, when the buffer status is to be reported, the terminal device reports the buffer status to the network device along with the second information, which does not require an additional uplink grant, and reduces the signaling overhead and latency for reporting the buffer status, thereby improving the efficiency of reporting the buffer status and lowering the resource overhead of a communication system.

```
┌─────────────────────────────────────────┐
│ Determining buffer status information    │──30
│ to be reported                           │
└─────────────────────────────────────────┘
                    │
                    ▼
┌─────────────────────────────────────────┐
│ Generating first adjustment information  │──31
│ related to first information based on    │
│ the buffer status information            │
└─────────────────────────────────────────┘
                    │
                    ▼
┌─────────────────────────────────────────┐
│ Generating second information based on   │──32
│ a reception status of the first          │
│ information and the first adjustment     │
│ information                              │
└─────────────────────────────────────────┘
                    │
                    ▼
┌─────────────────────────────────────────┐
│ Sending the second information to the    │──33
│ network device                           │
└─────────────────────────────────────────┘
```

FIG. 3

EP 4 708 958 A1

## Description

RELATED APPLICATION

The present disclosure claims priority to Chinese Patent Application No. 202410871331.6, entitled "method for reporting and receiving buffer status, and related apparatuses", and filed on June 28, 2024, which is herein incorporated by reference in its entirety.

TECHNICAL FIELD

The present disclosure relates to the technical field of communication, and particularly to a method for reporting and receiving a buffer status, and related apparatuses.

BACKGROUND

A terminal device can report a buffer status report (BSR) to a network device to indicate that the terminal device has uplink data to be transmitted and the buffer size of the uplink data. This enables the network device, upon receiving the BSR, to allocate time-frequency resources for the terminal device to transmit the uplink data based on the BSR.

In the prior art, when the terminal device reports the BSR to the network device, it needs to first obtain an uplink grant for reporting the BSR from the network device, and then notify the network device of the buffer size of the uplink data via a media access control (MAC) control element (CE). In this solution, the terminal device can usually obtain the uplink grant for reporting the BSR through a scheduling request (SR) procedure or a connected-state random access procedure.

However, the SR procedure and the connected-state random access procedure may lead to ow reporting efficiency and high resource overhead in a communication system. As an example, in scenarios of uplink burst data (e.g., service scenarios such as large file download and high-definition streaming media), each time the terminal device reports the BSR to the network device for the uplink burst data, it is necessary to obtain the uplink grant for reporting the BSR through an SR or a random access channel (RACH), thereby reducing the reporting efficiency of the BSR, and increasing the resource overhead of the communication system because part of time-frequency resources that could otherwise be used for data transmission are occupied for this purpose.

SUMMARY

Embodiments of the present disclosure provide a method for reporting and receiving a buffer status and related apparatuses, so as to improve the efficiency of reporting the buffer status and reduce the resource overhead of a communication system.

The specific technical solutions of the embodiments of the present disclosure are as follows.

In a first aspect, an embodiment of the present disclosure provides a method for reporting a buffer status, the method is performed by a terminal device, includes:

determining buffer status information to be reported;
generating first adjustment information related to first information based on the buffer status information, and the first information is sent by a network device to the terminal device;
generating second information based on a reception status of the first information and the first adjustment information; and
sending the second information to the network device.

In a second aspect, an embodiment of the present disclosure provides a method for receiving a buffer status, the method is performed by a network device, includes:

receiving second information sent by a terminal device, and the second information is generated by the terminal device based on a reception status of first information and first adjustment information when determining that there is buffer status information to be reported, the first information is sent by the network device to the terminal device, and the first adjustment information is generated by the terminal device based on the buffer status information; and
obtaining the buffer status information from the second information, and the second information is further used to indicate the reception status.

In a third aspect, an embodiment of the present disclosure provides an apparatus for reporting a buffer status, configured in a terminal device, the apparatus including:

a determination module configured to determine buffer status information to be reported;
a first generation module configured to generate first adjustment information related to first information based on the buffer status information, and the first information is sent by a network device to the terminal device;
a second generation module configured to generate second information based on a reception status of the first information and the first adjustment information; and
an information sending module configured to send the second information to the network device.

Optionally, before sending the second information to the network device, the determination module is further configured to:
determine to feed back the reception status of the first information to the network device.

Optionally, before determining to feed the reception status of the first information to the network device, the determination module is further configured to: determine that no scheduling grant for reporting the buffer status information to the network device has been obtained.

Optionally, the determination module is further configured to:

send a scheduling request or a random access preamble to the network device, when determining not to feed back the reception status of the first information to the network device.

Optionally, before the first adjustment information is generated based on the buffer status information, the apparatus further includes a configuration module configured to:

> send a first indication to the network device, and the first indication is used to indicate that the terminal device has a capability to report the buffer status information to the network device along with the second information; and
> receive a second indication sent by the network device, and the second indication is used to indicate that the network device supports the reporting of the buffer status information to the network device along with the second information.

Optionally, when sending the first indication to the network device, the configuration module is further configured to:

> send a first physical uplink control channel (PUCCH) message to the network device, and the first PUCCH message includes the first indication;
> when receiving the second indication sent by the network device, the configuration module is further configured to:
> receive a second PUCCH message sent by the network device, and the second PUCCH message includes the second indication.

Optionally, before the first adjustment information is generated based on the buffer status information, the configuration module is further configured to: receive a third indication sent by the network device, and the third indication is used to indicate configuration information for transmitting the second information.

Optionally, when receiving the third indication sent by the network device, the configuration module is further configured to: receive a third PUCCH message sent by the network device, and the third PUCCH message includes the third indication.

Optionally, when generating the first adjustment information based on the buffer status information, the first generation module is further configured to:

if a buffer size in the buffer status information is less than a data amount threshold, continue to count the buffer size, and the data amount threshold is determined according to a plurality of parameters in the configuration information; and

if the buffer size is greater than or equal to the data amount threshold, generate the first adjustment information based on the buffer size.

Optionally, the first adjustment information is phase rotation information.

Optionally, when generating the first adjustment information based on the buffer size, the first generation module is further configured to: determine, based on a data amount range to which the buffer size belongs, the phase rotation information associated with the data amount range, and the data amount range is determined according to a subset of parameters among the plurality of parameters.

Optionally, the plurality of parameters further include a first parameter, and the subset of parameters include a second parameter and a third parameter;

> the first parameter is used to indicate a minimum buffer size that the network device allows the terminal device to report;
> the second parameter is used to indicate a maximum buffer size that the network device allows the terminal device to report; and
> the third parameter is used to indicate the number of the data amount ranges.

Optionally, if the buffer size is greater than or equal to the maximum buffer size, the data amount range to which the buffer size belongs is a data amount range corresponding to the maximum buffer size.

Optionally, when generating the second information based on the reception status of the first information and the first adjustment information, the second generation module is further configured to: perform phase modulation on third information based on the first adjustment information to obtain the second information, and the third information is used to indicate the reception status of the first information.

Optionally, when performing phase modulation on the third information based on the first adjustment information to obtain the second information, the second generation module is further configured to:

> perform phase adjustment on a carrier wave of a first half-bandwidth corresponding to the third information based on the first adjustment information; and
> obtain the second information based on a carrier wave of a second half-bandwidth corresponding to the third information and the phase-adjusted carrier wave of the first half-bandwidth.

Optionally, the buffer status information is corresponding to uplink burst data.

In a fourth aspect, an embodiment of the present disclosure further provides an apparatus for receiving a buffer status, and the apparatus is configured in a network device and includes:

an information receiving module configured to, and the second information is generated by the terminal device based on a reception status of first information and first adjustment information when determining that there is buffer status information to be reported, the first information is sent by the network device to the terminal device, and the first adjustment information is generated by the terminal device based on the buffer status information; and
a processing module configured to obtain the buffer status information from the second information, and the second information is further used to indicate the reception status.

Optionally, before the second information sent by the terminal device is received, the apparatus further includes a configuration module configured to:

receive a first indication sent by the terminal device, and the first indication is used to indicate that the terminal device has a capability to report the buffer status information to the network device along with the second information; and
send a second indication to the terminal device, and the second indication is used to indicate that the network device supports the reporting of the buffer status information to the network device along with the second information.

Optionally, when receiving the first indication sent by the terminal device, the configuration module is further configured to:

receive a first PUCCH message sent by the terminal device, and the first PUCCH message includes the first indication;
when sending the second indication to the terminal device, the configuration module is further configured to:
send a second PUCCH message to the terminal device, and the second PUCCH message includes the second indication.

Optionally, before the second information sent by the terminal device is received, the configuration module is further configured to:
send a third indication to the terminal device, and the third indication is used to indicate configuration information for transmitting the second information.
Optionally, when sending the third indication to the terminal device, the configuration module is further configured to:

send a third UCCH message to the terminal device, and the third PUCCH message includes the third indication.
Optionally, when obtaining the buffer status information from the second information, the processing module is further configured to:

determine the first adjustment information based on a carrier wave of a first half-bandwidth corresponding to the second information and a carrier wave of a second half-bandwidth corresponding to the second information; and
determine the buffer status information corresponding to the first adjustment information based on a plurality of parameters in the configuration information.

Optionally, after the buffer status information corresponding to the first adjustment information is determined based on the plurality of parameters in the configuration information, the processing module is further configured to:
allocate an uplink transmission resource to the terminal device based on the buffer status information.
Optionally, after the buffer status information corresponding to the first adjustment information is determined based on the plurality of parameters in the configuration information, the processing module is further configured to:
demodulate the second information based on the first adjustment information to obtain third information, and the third information is used to indicate the reception status.
Optionally, when demodulating the second information based on the first adjustment information to obtain the third information, the processing module is further configured to:

perform phase rotation compensation on the carrier wave of the first half-bandwidth based on the first adjustment information; and
obtain the third information based on the carrier wave of the second half-bandwidth and the phase-rotation-compensated carrier wave of the first half-bandwidth.

In a fifth aspect, the present disclosure provides a communication system, including a terminal device and a network device;

the terminal device is configured to perform the steps of the method according to any one of the method embodiments in the first aspect; and
the network device is configured to perform the steps of the method according to any one of the method embodiments in the second aspect.

In a sixth aspect, the present disclosure provides an electronic device, including a memory, a processor, and a computer program stored in the memory and executable in the processor, and when executing the program, the processor implements the steps of the method according to any one of the first aspect or the second aspect.

In a seventh aspect, the present disclosure provides a computer-readable storage medium which stores a computer program, and when executed by a processor, the computer program implements the steps of the method according to any one of the first aspect or the second aspect.

In an eighth aspect, the present disclosure provides a computer program product, when invoked by a computer, the computer program product enables the computer to perform the steps of the method according to any one of the first aspect or the second aspect.

In the embodiments of the present disclosure, the terminal device determines the buffer status information to be reported, generates the first adjustment information based on the buffer status information when determining to feed back the reception status of the first information to the network device, and the first information is sent from the network device to the terminal device, generates the second information based on the reception status of the first information and the first adjustment information, and finally sends the second information to the network device. In this way, when the buffer status is to be reported, the terminal device reports the buffer status information to the network device along with the second information, without the need for an additional uplink grant, which reduces the signaling overhead and latency for reporting the buffer status, thereby improving the efficiency of reporting the buffer status and lowering the resource overhead of the communication system.

Other features and advantages of the present disclosure will be set forth in the following description, and in part will be obvious therefrom, or may be learned by practice of the present disclosure. The objectives and other advantages of the present disclosure can be achieved and attained by the structures particularly pointed out in the description, the claims and the drawings.

BRIEF DESCRIPTION OF DRAWINGS

In order to more clearly illustrate the technical solutions in the embodiments of the present disclosure, the drawings to be used in the description of the embodiments will be briefly introduced below. Obviously, the drawings involved in the following description only illustrate some embodiments of the present disclosure, and other drawings can be obtained by those of ordinary skill in the art according to these drawings without paying any inventive effort. In the drawings,

FIG. 1 illustrates a schematic diagram of obtaining an uplink grant for reporting the BSR according to an embodiment of the present disclosure;

FIG. 2 illustrates a schematic diagram of a system architecture according to an embodiment of the present disclosure;

FIG. 3 illustrates a schematic diagram of an implementation flow of a method for reporting a buffer status according to an embodiment of the present disclosure;

FIG. 4 illustrates a flowchart of generating first adjustment information according to an embodiment of the present disclosure;

FIG. 5 illustrates a schematic diagram of obtaining second information according to an embodiment of the present disclosure;

FIG. 6 illustrates a flowchart of a method for reporting a buffer status according to anther embodiment of the present disclosure;

FIG. 7 illustrates a schematic diagram of an implementation flow of a method for receiving a buffer status according to an embodiment of the present disclosure;

FIG. 8 illustrates a flowchart of obtaining buffer status information according to an embodiment of the present disclosure;

FIG. 9 illustrates a schematic diagram of obtaining third information according to an embodiment of the present disclosure;

FIG. 10 illustrates a flowchart of a method for reporting and receiving a buffer status according to an embodiment of the present disclosure;

FIG. 11 illustrates a structural diagram of an apparatus for reporting a buffer status according to an embodiment of the present disclosure;

FIG. 12 illustrates a structural diagram of an apparatus for receiving a caching data status according to an embodiment of the present disclosure; and

FIG. 13 illustrates a structural diagram of an electronic device according to an embodiment of the present disclosure.

DESCRIPTION OF EMBODIMENTS

Technical solutions in the embodiments of the present disclosure will be clearly and completely described below with reference to the drawings. Obviously, those described are only a part, rather than all, of the embodiments of the present disclosure. Based on the embodiments of the present disclosure, any other embodiment obtained by those of ordinary skill in the art without paying any inventive effort shall fall within the protection scope of the present disclosure.

It shall be noted that in the description of the present disclosure, "a plurality of" is understood as "at least two". "And/or" describes a relationship between objects and indicates that there may be three relationships. For example, "A and/or B" may mean three situations: A exists alone, both A and B exist, and B exists alone. "A is connected to B" may mean two situations: A is directly connected to B, and A is connected to B through C. In addition, in the description of the present disclosure, the terms such as "first" and "second" are only used for the purpose of distinguishing the descriptions, and shall not be understood as indicating or implying relative importance, nor shall they be understood as indicating or implying an order.

In addition, in the technical solutions of the present disclosure, the collection, transmission, use, etc. of data all comply with the requirements of relevant national laws and regulations.

Some technical terms in the embodiments of the present disclosure are explained below to facilitate the understanding by those skilled in the art.

(1) Hybrid automatic repeat request (HARQ): a technology formed by combining a forward error correction (FEC) and an automatic repeat request (ARQ). Specifically, if decoding fails, a receiver stores the received data and requests a sender to retransmit the data. The receiver combines the retransmitted data with the previously received data before decoding.

(2) Physical uplink control channel (PUCCH): a physical channel in a long-term evolution (LTE) system configured to transmit control information from the terminal device to the network device. The PUCCH mainly carries acknowledgement (ACK)/non-acknowledgment (NACK), channel quality indicator (CQI), pre-coding matrix indication (PMI), etc.

Further, based on the above explanations of the nouns and related terms, the design idea of the embodiments of the present disclosure is briefly introduced as follows.

The terminal device can report a buffer status report (BSR) to the network device to indicate that the terminal device has uplink data to be transmitted and the buffer size of the uplink data, so that after receiving the BSR, the network device can allocate a time-frequency resource for the terminal device to transmit the uplink data based on the BSR.

In the prior art, when the terminal device reports the BSR to the network device, it is necessary to obtain an uplink grant for reporting the BSR from the network device, and then notify the network device of the buffer size of the uplink data via a media access control (MAC) control element (CE). In this solution, the terminal device can usually obtain the uplink grant for reporting the BSR through a scheduling request (SR) procedure or a connected-state random access procedure.

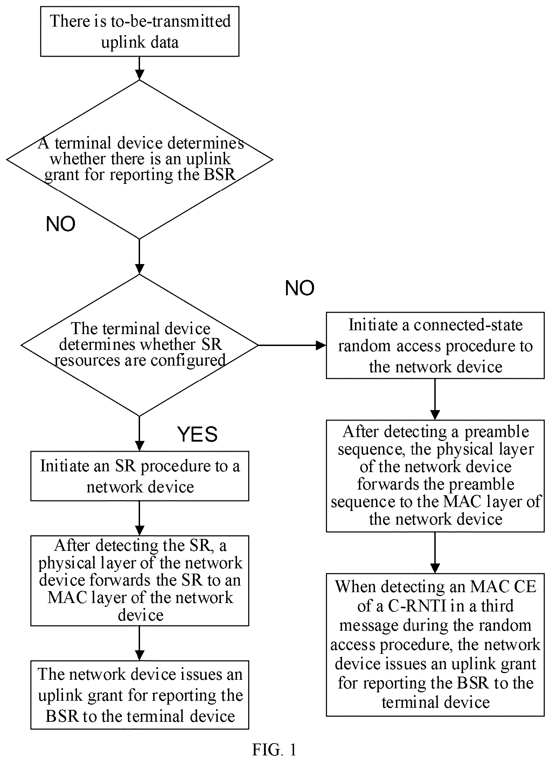

Specifically, as illustrated in FIG. 1, when the terminal device reports the BSR to the network device while having no uplink grant for reporting the BSR, the terminal device firstly determines whether a SR resource is configured. If so, the terminal device initiates an SR procedure to the network device; after detecting an SR, a physical layer of the network device forwards the SR to an MAC layer of the network device, and the network device issues an uplink grant for reporting the BSR to the terminal device. If not, the terminal device initiates a connected-state random access procedure to the network device; after detecting a preamble sequence, the physical layer of the network device forwards the preamble sequence to the MAC layer of the network device. Next, when detecting an MAC CE of a cell-radio network temporary identifier (C-RNTI) in a third message during the random access procedure, the network device issues an uplink grant for reporting the BSR to the terminal device.

However, the SR procedure and the connected-state random access procedure may lead to a low reporting efficiency and a high resource overhead in a communication system. As an example, in scenarios of uplink burst data (e.g., service scenarios such as large file download and high-definition streaming media), each time the terminal device reports the BSR to the network device for the uplink burst data, it is necessary to obtain the uplink grant for reporting the BSR through an SR or a random access channel (RACH), thereby reducing the reporting efficiency of the BSR, and increasing the resource overhead of the communication system because part of time-frequency resources that could otherwise be used for data transmission are occupied for this purpose.

Based on the above problems, the embodiments of the present disclosure propose a method for reporting and receiving a buffer status and related apparatuses. A terminal device determines buffer status information to be reported, generates first adjustment information based on the buffer status information when determining to feed back a reception status of first information to a network device, and the first information is sent from the network device to the terminal device, generates second information based on a reception status of the first information and the first adjustment information, and finally sends the second information to the network device. After receiving the second information, the network device obtains the buffer status information therefrom, and finally allocates an uplink transmission resource to the terminal device. In this way, when the buffer status is to be reported, the terminal device reports the buffer status information to the network device along with the second information, without the need for an additional uplink grant, which reduces the signaling overhead and latency for reporting the buffer status, thereby improving the efficiency of reporting the buffer status and lowering the resource overhead of the communication system, which in turn enhances the efficiency of uplink data transmission. Particularly, in the scenarios of uplink burst data, the efficiency of reporting the buffer status is significantly improved, and the resource overhead is greatly reduced.

In particular, the exemplary embodiments of the present disclosure are described below with reference to the drawings. It shall be understood that the exemplary embodiments described here are only used to illustrate and explain, rather than limiting, the present disclosure. Moreover, the embodiments of the present disclosure and the features in the embodiments can be combined with each other in a case where there is no conflict.

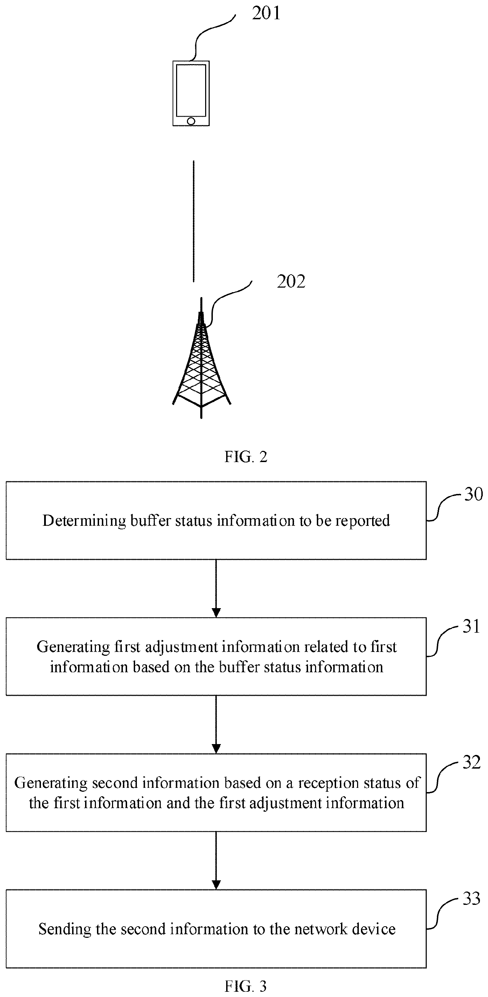

Referring to FIG. 2, which illustrates a schematic diagram of a system architecture according to an embodiment of the present disclosure. The system architecture includes: a terminal device 201 and a network device 202, which can perform information exchange with each other via a communication network, and a communication mode adopted by the communication network may specifically be a wireless communication mode.

As an example, the terminal device 201 may access the network through a cellular mobile communication technology to communicate with the network device 202, and the cellular mobile communication technology includes, for example, the 5$^{th}$ generation mobile networks (5G) technology.

The number of the communication devices involved in the above system architecture is not limited in the embodiment of the present disclosure. For example, there may be more terminal devices 201, more network devices 202, or any other network device (e.g., a gateway station). As illustrated in FIG. 2, only the terminal device 201 and the network device 202 are taken as examples for description. Each of the above devices and the respective functions thereof are briefly introduced below.

In this embodiment, the terminal device 201 includes, but is not limited to, a mobile phone, a tablet computer, a laptop computer, a handheld computer, a mobile internet device (MID), a wearable device, a virtual reality (VR) device, an augmented reality (AR) device, a wireless terminal device in industrial control, a wireless terminal device in autonomous driving, a wireless terminal device in a smart grid, a wireless terminal device in transportation safety, a wireless terminal device in a smart city, or a wireless terminal device in a smart home, etc.

The network device 202 includes, for example, an access network device and/or a core network device. The access network device is a device with a wireless transceiver function and configured to communicate with the terminal device 201. The access network device includes, but is not limited to, a base station (i.e., a public mobile communication base station), which is an interface device for a mobile device to access the internet and also a form of a radio station. It refers to a radio transceiver station which performs information transmission with a mobile phone terminal via a mobile communication switching center within a radio coverage area. Any other network device 202 with a wireless communication function may be in wireless communication with the terminal device 201, which is not limited in the present disclosure.

As an example, the base station includes, but is not limited to, the next generation node B (gNodeB/gNB), an evolved node B (eNodeB)/eNB, a radio network controller (RNC), a node B (NB), a base station controller (BSC), a base transceiver station (BTS), a home base station (e.g., a home evolved node B, a home node B, or an HNB), a base band unit (BBU), a transmitting and receiving point (TRP), a transmitting point (TP), a mobile switching center, etc. In the embodiment of the present disclosure, the base station may be a non-terrestrial base station in a Non-Terrestrial Network (NTN) system, such as a satellite.

The method for reporting and receiving a buffer status according to the exemplary embodiments of the present disclosure are described below in conjunction with the system architecture and with reference to the drawings. It shall be noted that the system architecture is only illustrated to facilitate the understanding of the spirit and principles of the present disclosure, and the embodiments of the present disclosure are not limited thereto in any way.

Referring to FIG. 3, which illustrates a schematic diagram of an implementation flow of a method for reporting a buffer status according to an embodiment of the present disclosure. Here, the description takes the terminal device as an executing entity as an example, and the specific procedure of the method is as follows.

Step 30: determining buffer status information to be reported.

In the embodiment of the present disclosure, it is determined whether there is a to-be-transmitted uplink data, and if so, the buffer status information to be reported is determined.

In this embodiment, the buffer status information represents the buffer size of the to-be-transmitted uplink data of the terminal device.

In addition, it shall be noted that in the embodiment of the present disclosure, the buffer status information may be a buffer status information corresponding to uplink burst data, which is not limited in the embodiment of the present disclosure.

Step 31: generating first adjustment information related to first information based on the buffer status information.

In this embodiment, the first information is sent by the network device to the terminal device, and the first information may be downlink data information and downlink signaling information, which is not limited in the embodiment of the present disclosure.

In the embodiment of the present disclosure, a reception status of the first information may be HARQ information, and the reception status is classified into ACK indicating that the terminal device has successfully received the first information, and NACK indicating that the terminal device has failed to receive the first information. Specifically, it is determined whether the first information meets a preset information reception quality. If not, the reception status is determined as NACK; and if so, the reception status is determined as ACK.

In this embodiment, the information reception quality may include successful decoding and information integrity, etc., which is not limited in the embodiment of the present disclosure.

For example, if the first information fails to be decoded, the reception status of the first information is determined as NACK.

In the embodiment of the present disclosure, it is determined whether a scheduling grant for reporting the buffer status information to the network device is obtained. If so, an MAC CE corresponding to the buffer status information is generated and reported to the network device. If not, it is determined whether it is necessary to feed back the reception status of the first information to the network device.

In the embodiment of the present disclosure, it is determined whether it is necessary to feed back the reception status of the first information to the network device. If so, the first adjustment information is generated based on the buffer status information. If not, a scheduling request or a random access preamble is sent to the network device to initiate an SR procedure or a random access procedure. Next, after detecting an SR, a physical layer of the network device forwards the SR to an MAC layer of the network device, and the network device grants a scheduling authorization for the terminal device to report the buffer status information. Finally, the terminal device sends the buffer status information to the network device, and the network device allocates uplink transmission resources to the terminal device based on the buffer status information. Alternatively, after detecting the random access preamble, the physical layer of the network device forwards the random access preamble to the MAC layer of the network device. Next, if detecting an MAC CE of a C-RNTI in a third message during the random access procedure, the network device grants a scheduling authorization for the terminal device to report the buffer status information. Finally, the terminal device sends the buffer status information to the network device, and the network device allocates uplink transmission resources to the terminal device based on the buffer status information.

In this way, even if there is no need to feed back the reception status of the first information to the network device, the buffer status information can still be reported to the network device through the SR procedure or the random access procedure, thereby ensuring the successful reporting of the buffer status information.

In addition, it shall be noted that in the embodiment of the present disclosure, if it is determined that the scheduling grant for reporting the buffer status information to the network device has not been obtained and it is necessary to feed back the reception status of the first information to the network device, the first adjustment information related to the first information may be generated based on the buffer status information, and the second information may be generated based on the reception status of the first information and the first adjustment information. Alternatively, the first adjustment information related to the first information may be generated based on the buffer status information, the second information may be generated based on the reception status of the first information and the first adjustment information, and if it is determined that the scheduling grant for reporting the buffer status information to the network device has not been obtained and it is necessary to feed back the reception status of the first information to the network device, the second information may be directly sent to the network device, which is not limited in the embodiment of the present disclosure.

Optionally, in the embodiment of the present disclosure, before generating the first adjustment information based on the buffer status information, the terminal device may perform pre-configuration for the reporting of the buffer status. The specific operations of the pre-configuration are as follows.

Configuration 1: sending a first indication to the network device.

Specifically, a first PUCCH message is sent to the network device, and the first PUCCH message includes the first indication.

In this embodiment, the first indication is used to indicate that the terminal device has a capability to report the buffer status information to the network device along with the second information, that is, the first indication is used to indicate that the terminal device has a capability to generate the second information based on its own buffer status information.

In the embodiment of the present disclosure, the terminal device may send the first indication by adding an optional field to a capability information element, which is not limited in the embodiment of the present disclosure.

For example, if the optional field is "PUCCH-BsrOverHarq" and the value corresponding to the "PUCCH-BsrOverHarq" is "supported", the terminal device has the capability to report the buffer status information to the network device along with the second information.

Configuration 2: receiving the second indication sent by the network device.

Specifically, a second PUCCH message sent by the network device is received, and the second PUCCH message includes the second indication.

In this embodiment, the second indication is used to indicate that the network device supports the reporting of the buffer status information to the network device along with the second information.

In the embodiment of the present disclosure, the terminal device may obtain the second indication through an optional field added by the network device to a high-layer information element PUCCH configuration, which is not limited in the embodiment of the present disclosure.

For example, an optional field "bsrOverHarqInfo" is added to "PUCCH-formatX" in a high-layer information element "PUCCH-Config". If "bsrOverHarqInfo" exists, the network device supports the reporting of the buffer status information to the network device along with the second information, that is, the current PUCCH resource supports the reporting of the buffer status information to the network device along with the second information. Conversely, if "bsrOverHarqInfo" does not exist, the network device does not support the reporting of the buffer status information to the network device along with the second information, that is, the current PUCCH resources do not support the reporting of the buffer status information to the network device along with the second information.

Configuration 3: receiving a third indication sent by the network device.

Specifically, a third PUCCH message sent by the network device is received, and the third PUCCH message includes the third indication.

In this embodiment, the third indication is used to indicate configuration information for transmitting the second information.

In the embodiment of the present disclosure, the terminal device may obtain the third indication through an optional field added by the network device to a high-layer information element PUCCH configuration, and then obtain the configuration information for transmitting the second information, which is not limited in the embodiment of the present disclosure.

For example, an optional field "bsrOverHarq" is added to "PUCCH-formatX" in a high-layer information element "PUCCH-Config". The field "bsrOverHarq" includes a field "Min-Bsr-Ratio", a field "Bsr-Refer-Max", and a field "NumOfBins". The field "bsrOverHarq" is used to describe a minimum buffer size that the network device allows the terminal device to report; the field "Bsr-Refer-Max" is used to describe a maximum buffer size that the network device allows the terminal device to report; and the field "NumOfBins" is used to describe the number of data amount ranges.

In this embodiment, "PUCCH-formatX" refers to any PUCCH format configuration, such as PUCCH-format1 or PUCCH-format2, which is not limited in the embodiment of the present disclosure.

Optionally, the third indication is further used to indicate that the network device supports the reporting of the buffer status information to the network device along with the second information. In this case, Configuration 2 can be implemented without receiving the second indication sent by the network device, i.e., Configuration 2 and Configuration 3 can be implemented simultaneously.

In the embodiment of the present disclosure, the terminal device may obtain, through the optional field added by the network device to the high-layer information element PUCCH configuration, the network device supporting the reporting of the buffer status information to the network device along with the second information, and the configuration information for transmitting the second information, which is not limited in the embodiment of the present disclosure.

For example, an optional field "bsrOverHarq" is added to "PUCCH-formatX" in a high-layer information element "PUCCH-Config". If "bsrOverHarq" exists, the network device supports the reporting of the buffer status information to the network device along with the second information, that is, the current PUCCH resources support the reporting of the buffer status information to the network device along with the second information. The field "bsrOverHarq" includes a field "Min-Bsr-Ratio", a field "Bsr-Refer-Max", and a field "NumOfBins". The field "bsrOverHarq" is used to describe a minimum buffer size that the network device allows the terminal device to report; the field "Bsr-Refer-Max" is used to describe a maximum buffer size that the network device allows the terminal device to report; and the field "NumOfBins" is used to describe the number of data amount ranges. Conversely, if "bsrOverHarq" does not exist, the network device does not support the reporting of the buffer status information to the network device along with the second information, that is, the current PUCCH resources do not support such reporting.

In this way, by performing pre-configuration for the reporting of the buffer status, synchronized and accurate configuration information for transmitting the second information can be obtained between the terminal device and the network device. The terminal device generates the first adjustment information based on the configuration information to achieve the accurate generation of the first adjustment information and then the accurate generation of the second information.

In addition, it shall be noted that in the embodiment of the present disclosure, if the core network stores information indicating that the terminal device has the capability to report the buffer status information to the network device along with the second information, the network device may query the core network for the capability of the terminal device, instead of requiring the terminal device to initiate a procedure for reporting the capability, thereby directly configuring the configuration information for transmitting the second information.

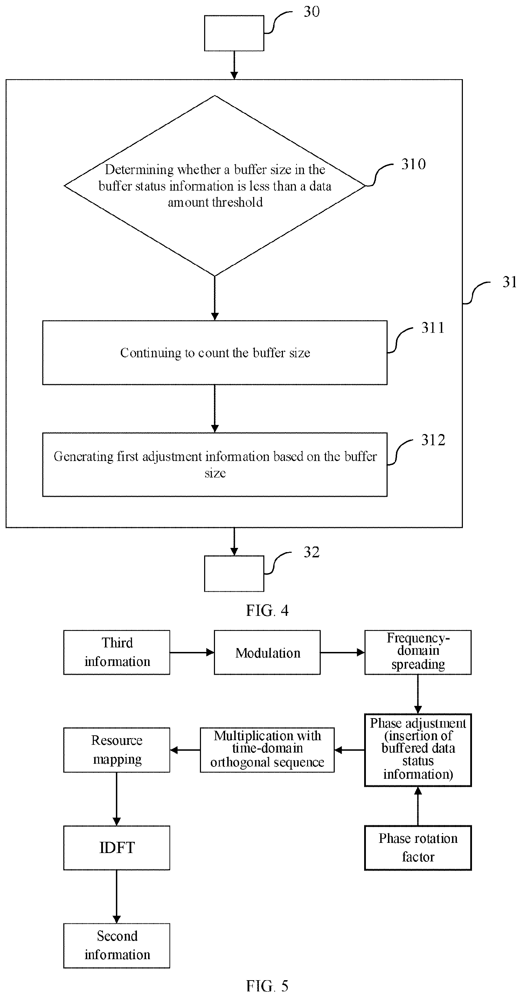

Optionally, a possible implementation is provided to generate the first adjustment information based on the buffer status information. Referring to FIG. 4, which illustrates a flowchart of generating first adjustment information according to an embodiment of the present disclosure. The specific operations to be performed are described in detail below.

Step 310: determining whether a buffer size in the buffer status information is less than a data amount threshold; if so, performing Step 311; otherwise, performing Step 312.

Step 311: continuing to count the buffer size.

In this embodiment, the data amount threshold is determined according to a plurality of parameters in the configuration information.

In the embodiment of the present disclosure, the plurality of parameters in the configuration information include: a first parameter, a second parameter, and a third parameter. The first parameter is used to describe a minimum buffer size that the network device allows the terminal device to report; the second parameter is used to describe a maximum buffer size that the network device allows the terminal device to report; and the third parameter is used to describe the number of data amount ranges.

The first parameter may be the minimum buffer size or a minimum buffer size coefficient. If the first parameter is the minimum buffer size coefficient, the value thereof may be 1/2, 1/4, 1/8, etc., which is not limited in the embodiment of the present disclosure.

The second parameter may be the maximum buffer size, and the value thereof may be 2000, which is not limited in the embodiment of the present disclosure.

The third parameter may be the number of ranges, and the value thereof may be 10, which is not limited in the embodiment of the present disclosure.

Specifically, the data amount threshold is determined based on the first parameter, the second parameter, and the third parameter.

In the embodiment of the present disclosure, the data amount threshold may be expressed as TH = $\alpha$M/N, where $\alpha$ is the first parameter (in this case, the first parameter is the minimum buffer size coefficient), M is the second parameter, and N is the third parameter.

For example, assuming that the value of the first parameter is 1/2, the value of the second parameter is 2000, and the value of the third parameter is 10, then the data amount threshold is (1/2 * 2000)/10 = 100.

It shall be noted that in the embodiment of the present disclosure, the data amount threshold may also be determined based on the first parameter. If the first parameter is the minimum buffer size, the data amount threshold is determined based on the first parameter.

For example, assuming that the value of the first parameter is 100, then the data amount threshold is determined to be 100.

In the embodiment of the present disclosure, it is determined whether the buffer size is less than the data amount threshold, and if so, it is determined that the buffer size does not meet the reporting condition, and the counting of the buffer size continues.

For example, assuming that the data amount threshold is 100 and the buffer size is 50, then the buffer size is less than the data amount threshold. It is determined that the buffer size does not meet the reporting condition, and the counting of the buffer size continues.

In this way, frequent reporting of the buffer status can be avoided, thereby saving the communication resources.

Step 312: generating first adjustment information based on the buffer size.

In the embodiment of the present disclosure, it is determined whether the buffer size is less than the data amount threshold, and if not, the first adjustment information is generated based on the buffer size.

In this embodiment, the first adjustment information is phase rotation information.

Optionally, a possible implementation is provided in the embodiment of the present disclosure to generate the first adjustment information based on the buffer size. The specific operations to be performed are described in detail below.

In the embodiment of the present disclosure, the phase rotation information associated with a data amount range to which the buffer size belongs is determined based on the data amount range.

In this embodiment, the data amount range is determined based on a subset of parameters among the plurality of parameters.

Specifically, the subset of parameters include the second parameter and the third parameter. In the embodiment of the present disclosure, an interval width of the data amount range is calculated based on the second parameter and the third parameter, and then the data amount range is determined based on the interval width thereof.

For example, assuming that the value of the second parameter is 2000 and the value of the third parameter is 10, then an interval width of the data amount range is 2000/10 = 200. The data amount ranges include: (0, 200], (200, 400], (400, 600], (600, 800], (800, 1000], (1000, 1200], (1200, 1400], (1400, 1600], (1600, 1800] and (1800, 2000].

Optionally, in the embodiment of the present disclosure, if the buffer size is greater than or equal to the maximum buffer size, the data amount range to which the buffer size belongs is a data amount range corresponding to the maximum buffer size.

For example, if the maximum buffer size is 2000, the buffer size is 2100, and the data amount range corresponding to the maximum buffer size is (1800, 2000], since the buffer size is greater than the maximum buffer size, the data amount range to which the buffer size belongs is (1800, 2000].

In this way, if the buffer size exceeds the maximum buffer size, the terminal device firstly reports a buffer size to the network device, so that the network device configures uplink transmission resources for the terminal device to transmit the uplink data corresponding to the buffer size. By controlling the reported buffer size, it is possible to reduce the power consumption of the terminal device and prevent the network device from experiencing congestion during reception of the uplink data.

In the embodiment of the present disclosure, the phase rotation information associated with the data amount range may be expressed as phi = $2\pi$k/N, where N is the third parameter, and k is a quantization parameter (k $\leq$ N-1). The quantization parameter represents the sequence number of the data amount range to which the buffer size belongs, which may be obtained by dividing the third parameter by the second parameter, then multiplying the result by the value of the buffer size, and applying the ceiling function to the final value.

In addition, it shall be noted that the phase rotation information is meaningless if k > N-1. Therefore, in the embodiment of the present disclosure, if k > N-1, N-1 is used as the value of k to avoid invalid phase adjustment.

For example, if the number of the data amount ranges is 10 and the sequence number of a data amount range to which the buffer size belongs is 9, then k = 9 and phi = $9\pi/5$.

Another example, if the sequence number of the data amount range to which the buffer size belongs is 10, then k = 9 and phi = $9\pi/5$.

In the embodiment of the present disclosure, the phase rotation information associated with the data amount range to which the buffer size belongs is determined based on the data amount range and in combination with the association relationship between the data amount range and the phase rotation information.

As an example, the data amount range (0, 200] is associated with the phase rotation information $\pi/5$, the data amount range (200, 400] is associated with the phase rotation information $2\pi/5$, the data amount range (400, 600] is associated with the phase rotation information $3\pi/5$, the data amount range (600, 800] is associated with the phase rotation information $4\pi/5$, the data amount range (800, 1000] is associated with the phase rotation information $\pi$, the data amount range (1000, 1200] is associated with the phase rotation information $6\pi/5$, the data amount range (1200, 1400] is associated with the phase rotation information $7\pi/5$, the data amount range (1400, 1600] is associated with $8\pi/5$, the data amount range (1600, 1800] is associated with the phase rotation information $9\pi/5$, and the data amount range (1800, 2000] is associated with the phase rotation information $9\pi/5$.

For example, assuming that the data amount threshold is 100, if the buffer size is 1700, the buffer size is greater than the data amount threshold, and the data amount range to which the buffer size 1700 belongs is (1600, 1800], so the phase rotation information associated with the data amount range (1600, 1800] is determined to be $9\pi/5$; if the buffer size is 1900, the buffer size is greater than the data amount threshold, and the data amount range to which the buffer size 1900 belongs is (1800, 2000], so the phase rotation information associated with the data amount range (1800, 2000] is determined to be $9\pi/5$.

In this way, since the buffer size corresponds to the data amount range which is associated with phase rotation information, the buffer size can be converted into the phase rotation information.

Step 32: generating second information based on a reception status of the first information and the first adjustment information.

In this embodiment, the second information is used to indicate the buffer status information and the reception status of the first information.

In the embodiment of the present disclosure, phase modulation is performed on third information based on the first adjustment information to obtain the second information.

In this embodiment, the third information is used to indicate the reception status of the first information, and the third information may be original HARQ information.

Specifically, in the embodiment of the present disclosure, phase modulation is performed on the modulated symbol phase of the third information based on the phase rotation information to obtain the second information.

Optionally, a possible implementation is provided in the embodiment of the present disclosure to perform phase modulation on the third information based on the first adjustment information to obtain the second information. The specific operations to be performed are described in detail below.

Step 320: performing phase adjustment on a carrier wave of a first half-bandwidth corresponding to the third information based on the first adjustment information.

In this embodiment, a frequency range of the first half-bandwidth is either greater or smaller than that of the second half-bandwidth, which is not limited in the embodiment of the present disclosure.

In the embodiment of the present disclosure, a phase rotation factor is obtained based on the first adjustment information, and then phase adjustment is performed on the carrier wave of the first half-bandwidth corresponding to the third information based on the phase rotation factor, while no phase adjustment is performed on a carrier of a second half-bandwidth corresponding to the third information.

In this embodiment, the modulus value of the phase rotation factor is constantly 1, and the phase is a phase rotation angle.

For example, if the frequency range of the first half-bandwidth is greater than that of the second half-bandwidth, phase adjustment is performed on the carrier wave of the first half-bandwidth. Specifically, a mapped symbol having a subcarrier wave index within a range of

$$N_{sc}^{PUCCH}/2 \leq n < N_{sc}^{PUCCH}$$ is calculated as

$$d(0)*r_{u,v}^{(a,\delta)}(n)*\beta$$, and a mapped symbol occupied by any other PUCCH channel, i.e., a mapped symbol having a subcarrier wave index within a range of 0 $\leq n < N_{sc}^{PUCCH}/2$ is calculated as $d(0)*r_{u,v}^{(a,\delta)}(n)$, where d(0) is a complex-valued symbol generated by modulating (e.g., binary phase shift keying (BPSK) or quadrature phase shift keying (QPSK)) 1 to 2 bits of the third information, $r_{u,v}^{(a,\delta)}(n)$ is a typical Zadoff-Chu (ZC) sequence in wireless mobile communications, $N_{sc}^{PUCCH}$ is the number of subcarrier waves occupied by PUCCH resources corresponding to the third information, and $N_{sc}^{PUCCH}$ is usually the number of subcarrier waves included in one physical resource block (PRB).

Step 321: obtaining the second information based on the carrier wave of the second half-bandwidth corresponding to the third information and the phase-adjusted carrier wave of the first half-bandwidth.

In the embodiment of the present disclosure, after phase adjustment is performed on the third information, preset processing is performed on the carrier wave of the second half-bandwidth corresponding to the third information and the phase-adjusted carrier wave of the first half-bandwidth to obtain the second information.

For example, referring to FIG. 5, which illustrates a schematic diagram of obtaining second information according to an embodiment of the present disclosure. Firstly, modulation and frequency-domain spreading are sequentially performed on the third information to obtain the spread third information. Next, phase adjustment is performed on the carrier wave of the first half-bandwidth corresponding to the third information based on the phase rotation factor. Further, multiplication with a time-domain orthogonal sequence, resource mapping, and inverse discrete Fourier transform (IDFT) are sequentially performed on the phase-adjusted third information to obtain the second information. In this embodiment, the third information is the original HARQ information, and the second information is new HARQ information including the buffer status information.

In this way, by performing phase adjustment on the carrier wave of the first half-bandwidth using the first adjustment information, without performing phase adjustment on the carrier wave of the second half-bandwidth, a phase difference is created between the carrier wave of the first half-bandwidth and the carrier wave of the second half-bandwidth, thereby enabling the insertion of the buffer status information into the third information, so as to obtain the second information including the buffer status information.

Step 33: sending the second information to the network device.

In the embodiment of the present disclosure, after being generated, the second information is sent by the terminal device to the network device.

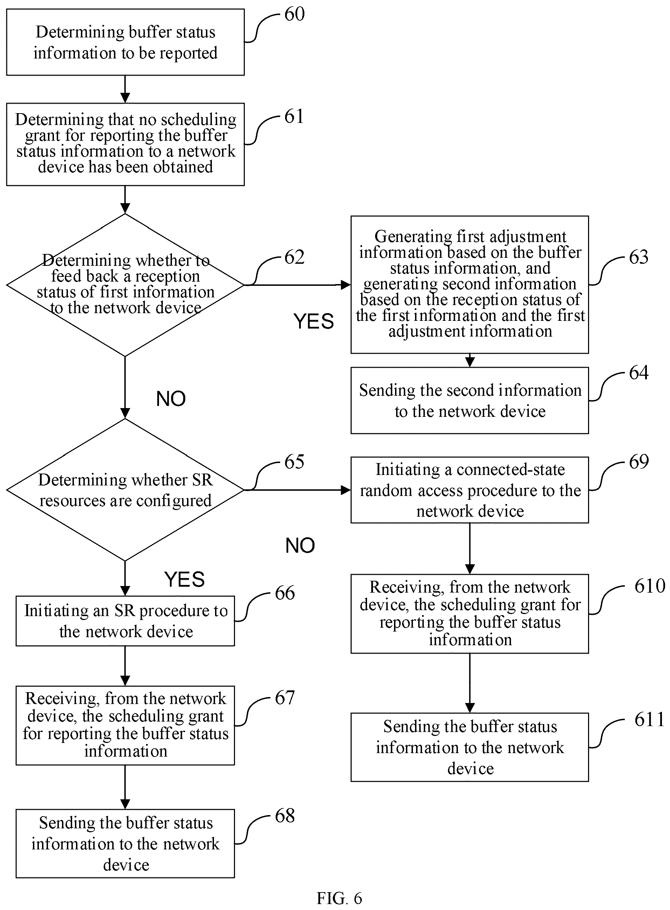

Based on the above embodiments, referring to FIG. 6, which illustrates a flowchart of a method for reporting a buffer status according to anther embodiment of the present disclosure. The method specifically includes the following steps.

Step 60: determining buffer status information to be reported.

Step 61: determining that no scheduling grant for reporting the buffer status information to a network device has been obtained.

Step 62: determined whether to feed back a reception status of first information to the network device; if so, performing Step 63; otherwise, performing Step 65.

In the embodiment of the present disclosure, when there is to-be-transmitted uplink data and there is no scheduling grant for reporting the buffer status information, the terminal device determines whether to feed back the reception status of the first information to the network device.

Step 63: generating first adjustment information based on the buffer status information, and generating second information based on the reception status of the first information and the first adjustment information.

In the embodiment of the present disclosure, the second information is used to indicate the buffer status information and the reception status of the first information, and the second information may be a HARQ signal.

Step 64: sending the second information to the network device.

Step 65: determining whether SR resources are configured; if so, performing Step 66; otherwise, performing Step 69.

Step 66: initiating an SR procedure to the network device.

Step 67: receiving, from the network device, the scheduling grant for reporting the buffer status information.

Step 68: sending the buffer status information to the network device.

Step 69: initiating a connected-state random access procedure to the network device.

Step 610: receiving, from the network device, the scheduling grant for reporting the buffer status information.

Step 611: sending the buffer status information to the network device.

In this way, it is possible to be compatible with the method for obtaining the scheduling grant in the prior art. When it is necessary to feed back the reception status of the first information to the network device, no additional scheduling grant is required, which reduces the signaling overhead and latency for reporting the buffer status, thereby improving the efficiency of reporting the buffer status. Particularly, in the scenarios of uplink burst data, the efficiency of reporting the buffer status is significantly improved, and the resource overhead is greatly reduced.

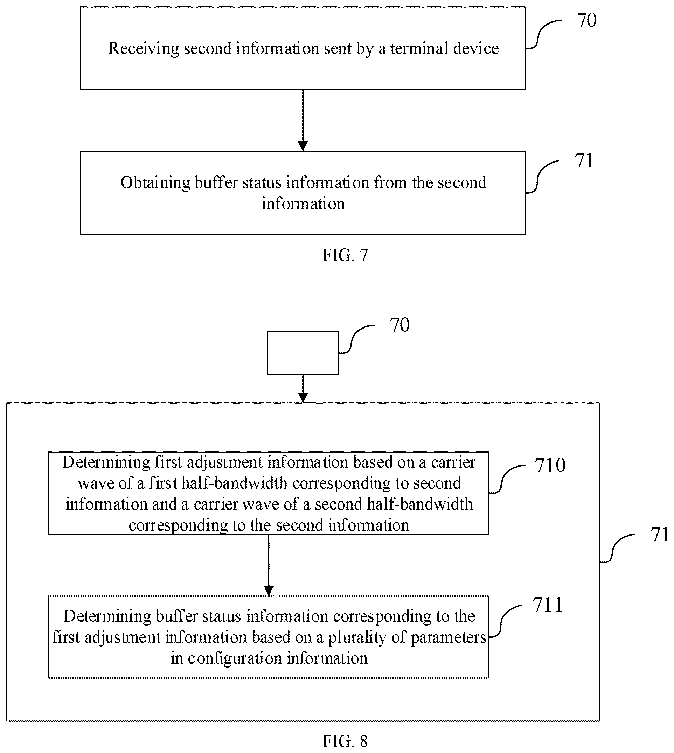

Referring to FIG. 7, which illustrates a schematic diagram of an implementation flow of a method for receiving a buffer status according to an embodiment of the present disclosure. Here, the description takes a terminal device as an executing entity as an example, and the specific procedure of the method is as follows.

Step 70: receiving second information sent by a terminal device.

In this embodiment, the second information is generated by the terminal device based on a reception status of first information and first adjustment information when determining that there is buffer status information to be reported, the first information is sent by the network device to the terminal device, the first adjustment information is generated by the terminal device based on the buffer status information, the second information is sent by the terminal device when determining that it is necessary to feed back the reception status to the network device, and the first information may be downlink data information and downlink signaling information, which are not limited in the embodiment of the present disclosure.

In the embodiment of the present disclosure, after determining that there is buffer status information to be reported, and if determining that no scheduling grant for reporting the buffer status information to the network device has been obtained and it is necessary to feed back the reception status of the first information to the network device, the terminal device generates the second information based on the reception status and the first adjustment information, and sends the second information to the network device. Next, the network device receives the second information sent by the terminal device and obtains the buffer status information from the second information.

In this embodiment, the reception status of the first information may be HARQ information, and the reception status is classified into ACK indicating that the terminal device has successfully received the first information, and NACK indicating that the terminal device has failed to receive the first information, which is not limited in the embodiment of the present disclosure.

In addition, it shall be noted that in the embodiment of the present disclosure, the buffer status information may be that corresponding to the uplink burst data, which is not limited in the embodiment of the present disclosure.

Optionally, in the embodiment of the present disclosure, before receiving the second information sent by the terminal device, the network device may perform pre-configuration for the reporting of the buffer status. The specific content of the pre-configuration is described in detail below.

Configuration 1: receiving a first indication sent by the terminal device.

Specifically, a first PUCCH message sent by the terminal device is received, and the first PUCCH message includes the first indication.

In this embodiment, the first indication is used to indicate that the terminal device has a capability to report the buffer status information to the network device along with the second information.

In the embodiment of the present disclosure, the network device may obtain the first indication through an optional field added by the terminal device to a capability information element, which is not limited in the embodiments of the present disclosure.

For example, if the optional field is "PUCCH-BsrOverHarq" and the value corresponding to the "PUCCH-BsrOverHarq" is "supported", the terminal device has the capability to report the buffer status information to the network device along with the second information.

Configuration 2: sending a second indication to the terminal device.

Specifically, a second PUCCH message is sent to the network device, and the second PUCCH message includes the second indication.

In this embodiment, the second indication is used to indicate that the network device supports the reporting of the buffer status information to the network device along with the second information, i.e., the network device has a capability to obtain the buffer status information of the terminal device from the second information.

In the embodiment of the present disclosure, the network device may send the second indication by adding an optional field to a high-layer information element PUCCH configuration, which is not limited in the embodiment of the present disclosure.

For example, an optional field "bsrOverHarqInfo" is added to "PUCCH-formatX" in a high-layer information element "PUCCH-Config". If "bsrOverHarqInfo" exists, the network device supports the reporting of the buffer status information to the network device along with the second information, that is, the current PUCCH resources support the reporting of the buffer status information to the network device along with the second information. Conversely, if "bsrOverHarqInfo" does not exist, the network device does not support the reporting of the buffer status information to the network device along with the second information, that is, the current PUCCH resources do not support the reporting of the buffer status information to the network device along with the second information.

Configuration 3: sending a third indication to the terminal device.

Specifically, a third PUCCH message is sent to the terminal device, and the third PUCCH message includes the third indication.

In this embodiment, the third indication is used to indicate configuration information for transmitting the second information.

In the embodiment of the present disclosure, the network device may send the third indication by adding an optional field to a high-layer information element PUCCH configuration, thereby indicating the configuration information for transmitting the second information, which is not limited in the embodiment of the present disclosure.

For example, an optional field "bsrOverHarq" is added to "PUCCH-formatX" in a high-layer information element "PUCCH-Config". The field "bsrOverHarq" includes a field "Min-Bsr-Ratio", a field "Bsr-Refer-Max", and a field "NumOfBins". The field "bsrOverHarq" is used to describe a minimum buffer size that the network device allows the terminal device to report; the field "Bsr-Refer-Max" is used to describe a maximum buffer size that the network device allows the terminal device to report; and the field "NumOfBins" is used to describe the number of data amount ranges.

Optionally, the third indication is further used to indicate that the network device supports the reporting of the buffer status information to the network device along with the second information. In this case, Configuration 2 can be implemented without sending the second indication to the terminal device, i.e., Configuration 2 and Configuration 3 can be implemented simultaneously.

In the embodiment of the present disclosure, the network device may indicate, through the optional field added to the high-layer information element PUCCH configuration, that the network device supports the reporting of the buffer status information to the network device along with the second information, and the configuration information for transmitting the second information, which is not limited in the embodiment of the present disclosure.

For example, an optional field "bsrOverHarq" is added to "PUCCH-formatX" in a high-layer information element "PUCCH-Config". If "bsrOverHarq" exists, the network device supports the reporting of the buffer status information to the network device along with the second information, that is, the current PUCCH resources support the reporting of the buffer status information to the network device along with the second information. The field "bsrOverHarq" includes a field "Min-Bsr-Ratio", a field "Bsr-Refer-Max", and a field "NumOfBins". The field "bsrOverHarq" is used to describe a minimum buffer size that the network device allows the terminal device to report; the field "Bsr-Refer-Max" is used to describe a maximum buffer size that the network device allows the terminal device to report; and the field "NumOfBins" is used to describe the number of data amount ranges. Conversely, if "bsrOverHarq" does not exist, the network device does not support the reporting of the buffer status information to the network device along with the second information, that is, the current PUCCH resources do not support the reporting of the buffer status information to the network device along with the second information.

In this way, by performing pre-configuration for the reporting of the buffer status, synchronized and accurate configuration information for transmitting the second information can be obtained between the terminal device and the network device. The network device relies on this configuration information to parse the buffer status information, thereby accurately obtaining the buffer status information.

Step 71: obtaining the buffer status information from the second information.

In this embodiment, the second information is further used to indicate the reception status.

Optionally, a possible implementation is provided to obtain the buffer status information from the second information. Referring to FIG. 8, which illustrates a flowchart of obtaining buffer status information according to an embodiment of the present disclosure. The specific operations to be performed are described in detail below.

Step 710: determining first adjustment information based on a carrier wave of a first half-bandwidth corresponding to second information and a carrier wave of a second half-bandwidth corresponding to the second information.

In this embodiment, the first adjustment information is phase rotation information, a frequency range of the first half-bandwidth is greater than that of the second half-bandwidth, or the frequency range of the first half-bandwidth is smaller than that of the second half-bandwidth, which is not limited in the embodiment of the present disclosure.

In the embodiment of the present disclosure, a carrier-smoothed first data of the first half-bandwidth corresponding to the second information and a carrier-smoothed second data of the second half-bandwidth corresponding to the second information are calculated, then a conjugate complex multiplication of the first data and the second data is calculated, and a phase rotation factor is estimated, so as to obtain the phase rotation information.

In this embodiment, the modulus value of the phase rotation factor is constantly 1, and the phase is a phase rotation angle corresponding to the phase rotation information.

Optionally, in the embodiment of the present disclosure, the carrier-smoothed first data of the first half-bandwidth corresponding to the second information is expressed as

$$\widehat{D}_1 = \left( \sum_{i=0}^{i=N_{sc}^{PUCCH}/2-1} D_i \right) / \left( N_{sc}^{PUCCH}/2 \right)$$ , and the carrier-smoothed second data of the second half-bandwidth corresponding to the second information is expressed as

$$\widehat{D}_0 = \left( \sum_{i=N_{sc}^{PUCCH}/2}^{N_{sc}^{PUCCH}} D_i \right) / \left( N_{sc}^{PUCCH}/2 \right).$$

Where, $N_{sc}^{PUCCH}$ is the number of subcarrier waves occupied by the PUCCH resources corresponding to the second information, and $D_i$ is an i-th element of a data sequence obtained after the second information undergoes a channel estimation compensation and despreading of a local spreading sequence.

In this way, noise can be eliminated by the smoothing, thereby improving the accuracy of the estimation of the buffer status information.

Step 711: determining buffer status information corresponding to the first adjustment information based on a plurality of parameters in configuration information.

In the embodiment of the present disclosure, a data amount range associated with the first adjustment information is determined by a maximum likelihood estimation based on a plurality of parameters in the configuration information and the first adjustment information, so as to obtain the buffer status information corresponding to the data amount range.

In this embodiment, the plurality of parameters in the configuration information include a first parameter, a second parameter, and a third parameter. The first parameter is used to describe a minimum buffer size that the network device allows the terminal device to report, the second parameter is used to describe a maximum buffer size that the network device allows the terminal device to report, and the third parameter is used to describe the number of the data amount ranges.

The first parameter may be the minimum buffer size or a minimum buffer size coefficient. If the first parameter is the minimum buffer size coefficient, the value thereof may be 1/2, 1/4, 1/8, etc., which is not limited in the embodiment of the present disclosure.

The second parameter may be the maximum buffer size, and the value thereof may be 2000, which is not limited in the embodiment of the present disclosure.

The third parameter may be the number of ranges, and the value thereof may be 10, which is not limited in the embodiment of the present disclosure.

As an example, assuming that the value of the second parameter is 2000 and the value of the third parameter is 10, then an interval width of the data amount range is 2000/10 = 200. The data amount ranges include: (0, 200], (200, 400], (400, 600], (600, 800], (800, 1000], (1000, 1200], (1200, 1400], (1400, 1600], (1600, 1800] and (1800, 2000]. The data amount range (0, 200] is associated with the phase rotation information $\pi/5$, the data amount range (200, 400] is associated with the phase rotation information $2\pi/5$, the data amount range (400, 600] is associated with the phase rotation information $3\pi/5$, the data amount range (600, 800] is associated with the phase rotation information $4\pi/5$, the data amount range (800, 1000] is associated with the phase rotation information $\pi$, the data amount range (1000, 1200] is associated with the phase rotation information $6\pi/5$, the data amount range (1200, 1400] is associated with the phase rotation information $7\pi/5$, the data amount range (1400, 1600] is associated with the phase rotation information $8\pi/5$, the data amount range (1600, 1800] is associated with the phase rotation information $9\pi/5$, and the data amount range (1800, 2000] is associated with the phase rotation information $9\pi/5$. Assuming that the data amount range corresponding to the phase rotation information $2\pi/5$ is (200, 400], then the estimated value of the buffer status information is a value within (200, 400], and if a median value is taken, the estimated value of the buffer status information is 300.

Further, in the embodiment of the present disclosure, after the buffer status information corresponding to the first adjustment information is determined based on the plurality of parameters in the configuration information, uplink transmission resources may be allocated to the terminal device based on the buffer status information.

In the embodiment of the present disclosure, after obtaining the buffer status information, the physical layer of the network device reports the buffered status data to the MAC layer of the network device, so as to allocate uplink transmission resources corresponding to the buffer status information to the terminal device, thereby enabling the terminal device to transmit the uplink data.

Further, in the embodiment of the present disclosure, after the buffer status information corresponding to the first adjustment information is determined based on the plurality of parameters in the configuration information, the second information may be demodulated based on the first adjustment information to obtain third information.

In this embodiment, the third information is used to indicate the reception status of the first information.

Specifically, in the embodiment of the present disclosure, a possible implementation is provided to obtain the third information. The specific operations to be performed are described in detail below.

Step 712: performing phase rotation compensation on a carrier wave of a first half-bandwidth based on first adjustment information.

In the embodiment of the present disclosure, the carrier-smoothed first data of the first half-bandwidth is multiplied by a phase rotation factor corresponding to phase rotation information to obtain third data, which serves as the phase-rotation-compensated carrier wave of the first half-bandwidth.

Step 713: obtaining the third information based on a carrier wave of a second half-bandwidth and the phase-rotation-compensated carrier wave of the first half-bandwidth.

In the embodiment of the present disclosure, an average value of the third data and the carrier-smoothed second data of the second half-bandwidth is calculated, and then preset processing is performed to obtain the third information.

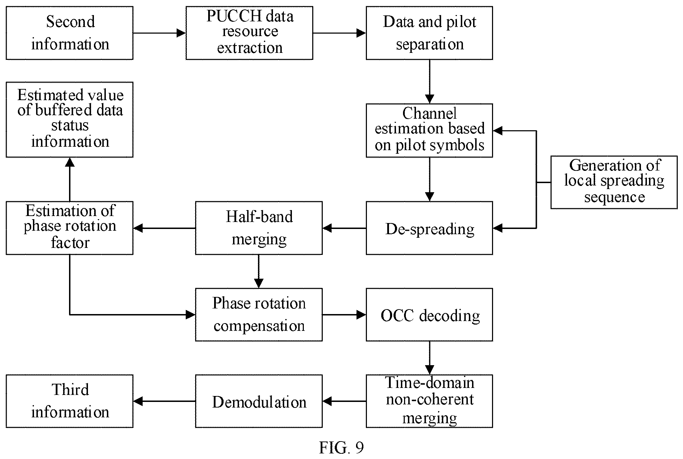

For example, referring to FIG. 9, which illustrates a schematic diagram of obtaining third information according to an embodiment of the present disclosure. Firstly, PUCCH data resource extraction, data and pilot separation, channel estimation based on pilot symbols, and de-spreading are sequentially performed on the second information to obtain the de-spread second information, and the channel estimation based on pilot symbols and the de-spreading are implemented in combination with a local spreading sequence. Next, half-band merging is performed on the carrier wave of the first half-bandwidth corresponding to the second information and the carrier wave of the second half-bandwidth corresponding to the second information, and the phase rotation factor corresponding to the phase rotation information is estimated, so as to determine the estimated value of the buffer status information corresponding to the phase rotation factor based on the plurality of parameters in the configuration information. Further, phase rotation compensation is performed on the half-band merged second information based on the phase rotation factor. Finally, orthogonal cover code (OCC) decoding, time-domain non-coherent merging, and demodulation are performed on the compensated second information to obtain the third information, and the third information is the original HARQ information not including the buffer status information, and the second information is new HARQ information including the buffer status information.

In this way, since there is a phase difference between the carrier wave of the first half-bandwidth and the carrier wave of the second half-bandwidth, by performing phase rotation compensation on the carrier wave of the first half-bandwidth, it is possible to eliminate the interference of the buffer status information in the second information and obtain accurate third information.

Optionally, in the embodiment of the present disclosure, after obtaining the third information, the network device retransmits the first information to the terminal device if the reception status is NACK.

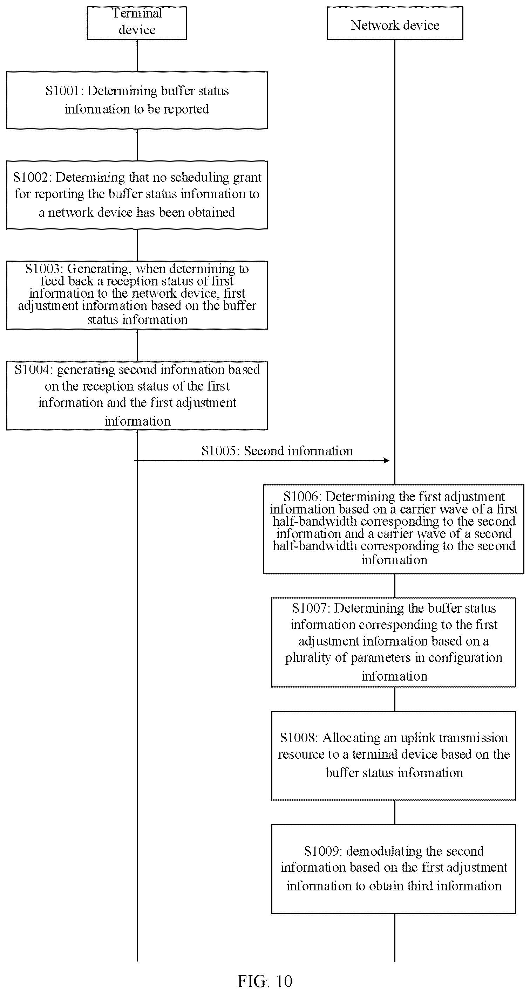

Based on the above embodiments, referring to FIG. 10, which illustrates a flowchart of a method for reporting and receiving a buffer status according to an embodiment of the present disclosure. The method specifically includes the following steps.

Step 1001: determining, by a terminal device, buffer status information to be reported.

Step 1002: determining that no scheduling grant for reporting the buffer status information to a network device has been obtained.

Step 1003: generating first adjustment information based on the buffer status information, when determining to feed back a reception status of first information to the network device.

In this embodiment, the first information is sent by the network device to the terminal device.

Step 1004: generating second information based on the reception status of the first information and the first adjustment information.

Step 1005: sending, by the terminal device, the second information to a network device.

Step 1006: determining, by the network device, the first adjustment information based on a carrier wave of a first half-bandwidth corresponding to the second information and a carrier wave of a second half-bandwidth corresponding to the second information.

Step 1007: determining the buffer status information corresponding to the first adjustment information based on a plurality of parameters in configuration information.

Step 1008: allocating an uplink transmission resource to the terminal device based on the buffer status information.

Step 1009: demodulating the second information based on the first adjustment information to obtain third information.

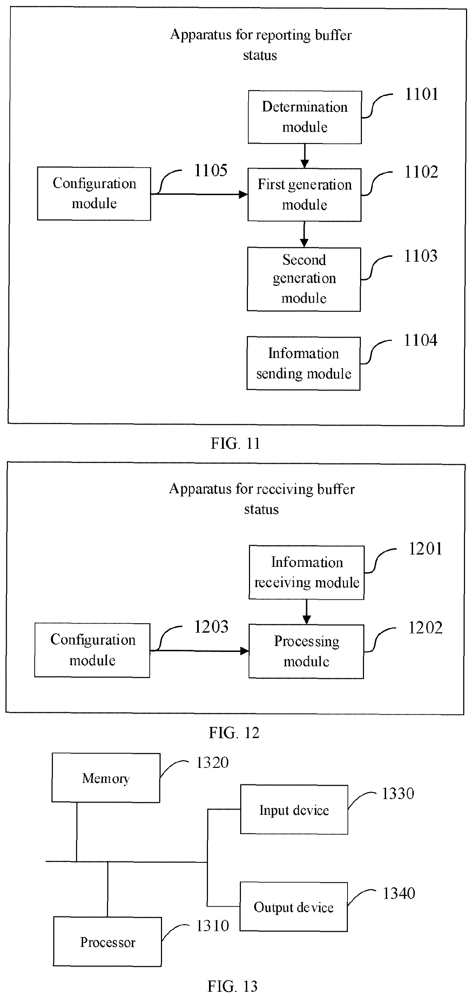

Based on the same inventive concept, an embodiment of the present disclosure further provides an apparatus for reporting a buffer status. Referring to FIG. 11, which illustrates a structural diagram of an apparatus for reporting a buffer status according to an embodiment of the present disclosure. The apparatus is configured in a terminal device and includes:

a determination module 1101 configured to determine buffer status information to be reported;

a first generation module 1102 configured to generate the first adjustment information related to first information based on the buffer status information, and the first information is sent by a network device to a terminal device;

a second generation module 1103 configured to generate second information based on a reception status of the first information and the first adjustment information; and

an information sending module 1104 configured to send the second information to the network device.

Optionally, before sending the second information to the network device, the determination module 1101 is further configured to:

determine to feed back the reception status of the first information to the network device.

Optionally, before determining to feed back the reception status of the first information to the network device, the determination module 1101 is further configured to:

determine that no scheduling grant for reporting the buffer status information to the network device has been obtained.

Optionally, the determination module 1101 is further configured to:

send a scheduling request or a random access preamble to the network device, when determining not to feed back the reception status of the first information to the network device.

Optionally, before the first adjustment information is the generated based on the buffer status information, the apparatus further includes a configuration module 1105 configured to:

send a first indication to the network device, and the first indication is used to indicate that the terminal device has a capability to report the buffer status information to the network device along with the second information; and

receive a second indication sent by the network device, and the second indication is used to indicate that the network device supports the reporting of the buffer status information to the network device along with the second information.

Optionally, when sending the first indication to the network device, the configuration module 1105 is further configured to:

send a first physical uplink control channel (PUCCH) message to the network device, and the first PUCCH message includes the first indication;

when receiving the second indication sent by the network device, the configuration module 1105 is further configured to:
receive a second PUCCH message sent by the network device, and the second PUCCH message includes the second indication.

Optionally, before the first adjustment information is generated based on the buffer status information, the configuration module 1105 is further configured to:
receive a third indication sent by the network device, and the third indication is used to indicate configuration information for transmitting the second information.

Optionally, when receiving the third indication sent by the network device, the configuration module 1105 is further configured to:
receive a third PUCCH message sent by the network device, and the third PUCCH message includes the third indication.

Optionally, when generating the first adjustment information based on the buffer status information, the first generation module 1102 is further configured to:

if a buffer size in the buffer status information is less than a data amount threshold, continue to count the buffer size, and the data amount threshold is determined according to a plurality of parameters in the configuration information; and
if the buffer size is greater than or equal to the data amount threshold, generate the first adjustment information based on the buffer size.

Optionally, the first adjustment information is phase rotation information.

Optionally, when generating the first adjustment information based on the buffer size, the first generation module 1102 is further configured to:
determine, based on a data amount range to which the buffer size belongs, the phase rotation information associated with the data amount range, and the data amount range is determined according to a subset of parameters among the plurality of parameters.

Optionally, the plurality of parameters further include a first parameter, and the subset of parameters include a second parameter and a third parameter;

the first parameter is used to indicate a minimum buffer size that the network device allows the terminal device to report;
the second parameter is used to indicate a maximum buffer size that the network device allows the terminal device to report; and
the third parameter is used to indicate the number of the data amount ranges.

Optionally, if the buffer size is greater than or equal to the maximum buffer size, the data amount range to which the buffer size belongs is corresponding to the maximum buffer size.

Optionally, when generating the second information based on the reception status of the first information and the first adjustment information, the second generation module 1103 is further configured to:
perform phase modulation on third information based on the first adjustment information to obtain the second information, and the third information is used to indicate the reception status of the first information.

Optionally, when performing phase modulation on the third information based on the first adjustment information to obtain the second information, the second generation module 1103 is further configured to:

perform phase adjustment on a carrier wave of a first half-bandwidth corresponding to the third information based on the first adjustment information; and
obtain the second information based on a carrier wave of a second half-bandwidth corresponding to the third information and the phase-adjusted carrier wave of the first half-bandwidth.

Optionally, the buffer status information is corresponding to uplink burst data.

Based on the same inventive concept, the embodiment of the present disclosure further provides an apparatus for receiving a buffer status. Referring to FIG. 12, which illustrates a structural diagram of an apparatus for receiving a caching data status according to an embodiment of the present disclosure. The apparatus is configured in a network device and includes:

an information receiving module 1201 configured to, and the second information is generated by the terminal device based on a reception status of first information and first adjustment information when determining that there is buffer status information to be reported, the first information is sent by the network device to the terminal device, the first information is sent by the network device to the terminal device, and the first adjustment information is generated by the terminal device based on the buffer status information;
a processing module 1202 configured to obtain the buffer status information from the second information, and the second information is further used to indicate the reception status.

Optionally, before the second information sent by the terminal device is received, the apparatus further includes a configuration module 1203 configured to:

receive a first indication sent by the terminal device, and the first indication is used to indicate that the terminal device has a capability to report the buffer status information to the network device along with the second information; and
send a second indication to the terminal device, and the second indication is used to indicate that the network device supports the reporting of the buffer status information to the network device along with the second information.

Optionally, when receiving the first indication sent by the terminal device, the configuration module 1203 is further configured to:

receive a first PUCCH message sent by the terminal device, and the first PUCCH message includes a first indication;
when sending the second indication to the terminal device, the configuration module 1203 is further configured to:
send a second PUCCH message to the terminal device, and the second PUCCH message includes a second indication.

Optionally, before the second information sent by the terminal device is received, the configuration module 1203 is further configured to:
send a third indication to the terminal device, and the third indication is used to indicate configuration information for transmitting the second information.

Optionally, when sending the third indication to the terminal device, the configuration module 1203 is further configured to:
send a third UCCH message to the terminal device, and the third PUCCH message includes the third indication.

Optionally, when obtaining the buffer status information from the second information, the processing module 1202 is further configured to:

determine the first adjustment information based on a carrier wave of a first half-bandwidth corresponding to the second information and a carrier wave of a second half-bandwidth corresponding to the second information; and
determine the buffer status information corresponding to the first adjustment information based on a plurality of parameters in the configuration information.

Optionally, after determining the buffer status information corresponding to the first adjustment information based on the plurality of parameters in the configuration information, the processing module 1202 is further configured to:
allocate an uplink transmission resource to the terminal device based on the buffer status information.

Optionally, after determining the buffer status information corresponding to the first adjustment information based on the plurality of parameters in the configuration information, the processing module 1202 is further configured to:
demodulate the second information based on the first adjustment information to obtain third information, and the third information is used to indicate the reception status.

Optionally, when demodulating the second information based on the first adjustment information to obtain the third information, the processing module 1202 is further configured to:

perform phase rotation compensation on the carrier wave of the first half-bandwidth based on the first adjustment information; and
obtain the third information based on the carrier wave of the second half-bandwidth and the phase-rotation-compensated carrier wave of the first half-bandwidth.

Based on the above embodiments, referring to FIG. 13, which illustrates a structural diagram of an electronic device according to an embodiment of the present disclosure.

An embodiment of the present disclosure provides an electronic device, which may include a processor 1310 (Central Processing Unit, CPU), a memory 1320, an input device 1330, an output device 1340, etc. The input device 1330 may include a keyboard, a mouse, a touch screen, etc., and the output device 1340 may include a display device such as a Liquid Crystal Display (LCD), a Cathode Ray Tube (CRT), etc.

The memory 1320 may include a Read-Only Memory (ROM) and a Random-Access Memory (RAM), and provides the processor 1310 with program instructions and data stored in the memory 1320. In the embodiment of the present disclosure, the memory 1320 may be configured to store a program for implementing any method for reporting and receiving the buffer status in the embodiments of the present disclosure.

The processor 1310 invokes the program instructions stored in the memory 1320, and perform, according to the obtained program instructions, any method for reporting and receiving the buffer status in the embodiments of the present disclosure.

Based on the above embodiments, an embodiment of the present disclosure provides a computer-readable storage medium which stores a computer program, and when executed by a processor, the computer program implements the method for reporting and receiving the buffer status according to any of the aforementioned method embodiments.

In some possible implementations, various aspects of the method for reporting and receiving the buffer status of the present disclosure may also be implemented in the form of a program product which includes program codes, and when the program product executes on an device, the program codes enable a control device to perform the steps of any method for reporting and receiving the buffer status according to various exemplary embodiments of the present disclosure as described in the specification.

It shall be noted that although several units or sub-units of the apparatus are mentioned in the above detailed description, this division is merely exemplary and not mandatory. In fact, according to the embodiments of the present disclosure, the features and functions of two or more units described above may be embodied in a single unit. Conversely, the features and functions of one unit described above may be further divided to be embodied in a plurality of units.

In addition, although the operations of the method of the present disclosure are illustrated in a specific order in the drawings, this does not require or imply that these operations must be performed in this specific order, or that all the illustrated operations must be performed to achieve the desired result. Additionally, or alternatively, some steps may be omitted, a plurality of steps may be combined into one step for execution, and/or one step may be decomposed into a plurality of steps for execution.

Those skilled in the art shall appreciate that any embodiment of the present disclosure can be provided as a method, a system or a computer program product. Therefore, the present disclosure can take the form of a full hardware embodiment, a full software embodiment, or an embodiment combining software and hardware. Moreover, the present disclosure can take the form of a computer program product implemented on one or more computer usable storage mediums (including, but not limited to, a magnetic disc memory, CD-ROM, optical storage, etc.) containing therein computer usable program codes.

The present disclosure is described with reference to a flowchart and/or a block diagram of the method, the device (system) and the computer program product according to the embodiments of the present disclosure. It shall be appreciated that each flow and/or block in the flowchart and/or the block diagram and a combination of flows and/or blocks in the flowchart and/or the block diagram can be realized by computer program instructions. Those computer program instructions can be provided to a general computer, a dedicated computer, an embedded processor or a processor of other programmable data processing device to produce a machine, so that the instructions executed by the processor of the computer or other programmable data processing device produce devices for realizing specified functions in one or more flows in the flowchart and/or one or more blocks in the block diagram.

These computer program instructions may also be stored in a computer readable memory capable of guiding the computer or other programmable data processing devices to work in a particular manner, so that the instructions stored in the computer readable memory can produce manufacture articles including an instructing device which realizes function(s) specified in one or more flows in the flowchart and/or one or more blocks in the block diagram.

These computer program instructions may also be loaded onto the computer or other programmable data processing devices, so that a series of operation steps are performed on the computer or other programmable data processing devices to produce a processing realized by the computer, thus the instructions executed on the computer or other programmable devices provide step(s) for realizing function(s) specified in one or more flows in the flowchart and/or one or more blocks in the block diagram.

Obviously, various modifications and variations can be made to the present disclosure by those skilled in the art without departing from the spirit and the scope of the present disclosure. Thus, when these modifications and variations to the present disclosure fall within the scope of the claims of the present disclosure and the technical equivalents thereof, the present disclosure is also intended to include these modifications and variations.

**Claims**

1. A method for reporting a buffer status, performed by a terminal device, comprising:

   determining buffer status information to be reported;
   generating first adjustment information related to first information based on the buffer status information, wherein the first information is sent by a network device to the terminal device;
   generating second information based on a reception status of the first information and the first adjustment information; and
   sending the second information to the network device.

2. The method according to claim 1, wherein before the sending the second information to the network device, the method further includes:
   determining to feed back the reception status of the first information to the network device.

3. The method according to claim 2, wherein before the determining to feed back the reception status of the first information to the network device, the method further includes:
   determining that no scheduling grant for reporting the buffer status information to the network device has been obtained.

4. The method according to claim 2, further comprising:
   sending a scheduling request or a random access preamble to the network device, when determining not to feed back the reception status of the first information to the network device.

5. The method according to claim 1, wherein before the generating the first adjustment information based on the buffer status information, the method further includes:

sending a first indication to the network device, wherein the first indication is used to indicate that the terminal device has a capability to report the buffer status information to the network device along with the second information; and receiving a second indication sent by the network device, wherein the second indication is used to indicate that the network device supports the reporting of the buffer status information to the network device along with the second information.

6. The method according to claim 5, wherein the sending the first indication to the network device includes:

sending a first physical uplink control channel (PUCCH) message to the network device, wherein the first PUCCH message includes the first indication; the receiving the second indication sent by the network device includes: receiving a second PUCCH message sent by the network device, wherein the second PUCCH message includes the second indication.

7. The method according to claim 1, wherein before the generating the first adjustment information based on the buffer status information, the method further includes: receiving a third indication sent by the network device, wherein the third indication is used to indicate configuration information for transmitting the second information.

8. The method according to claim 7, wherein the receiving the third indication sent by the network device includes: receiving a third physical uplink control channel (PUCCH) message sent by the network device, wherein the third PUCCH message includes the third indication.

9. The method according to claim 7, wherein the generating the first adjustment information based on the buffer status information includes:

if a buffer size in the buffer status information is less than a data amount threshold, continuing to count the buffer size, wherein the data amount threshold is determined according to a plurality of parameters in the configuration information; and if the buffer size is greater than or equal to the data amount threshold, generating the first adjustment information based on the buffer size.

10. The method according to claim 9, wherein the first adjustment information is phase rotation information.

11. The method according to claim 10, wherein the generating the first adjustment information based on the buffer size includes: determining, based on a data amount range to which the buffer size belongs, the phase rotation information associated with the data amount range, wherein the data amount range is determined according to a subset of parameters among the plurality of parameters.

12. The method according to claim 11, wherein the plurality of parameters further include a first parameter, and the subset of parameters include a second parameter and a third parameter;

the first parameter is used to indicate a minimum buffer size that the network device allows the terminal device to report; the second parameter is used to indicate a maximum buffer size that the network device allows the terminal device to report; and the third parameter is used to indicate a number of the data amount ranges.

13. The method according to claim 12, wherein if the buffer size is greater than or equal to the maximum buffer size, the data amount range to which the buffer size belongs is a data amount range corresponding to the maximum buffer size.

14. The method according to claim 1, wherein the generating the second information based on a reception status of the first information and the first adjustment information includes: performing phase modulation on third information based on the first adjustment information to obtain the second information, wherein the third information is used to indicate the reception status of the first information.

15. The method according to claim 14, wherein the performing phase modulation on the third information based on the first adjustment information to obtain the second information includes:

performing phase adjustment on a carrier wave of a first half-bandwidth corresponding to the third information based on the first adjustment information; and obtaining the second information based on a carrier wave of a second half-bandwidth corresponding to the third information and the phase-adjusted carrier wave of the first half-bandwidth.

16. The method according to any one of claims 1 to 15, wherein the buffer status information is corresponding to uplink burst data.

17. A method for receiving a buffer status performed by a network device, comprising:

receiving second information sent by a terminal device, wherein the second information is generated by the terminal device based on a reception status of first information and first adjustment information when determining that there is buffer status information to be reported, the first information is sent by the network device to the terminal device, and the first adjustment information is generated by the terminal device based on the buffer status information; and
obtaining the buffer status information from the second information, wherein the second information is further used to indicate the reception status.

18. The method according to claim 17, wherein before the receiving the second information sent by the terminal device, the method further includes:

receiving a first indication sent by the terminal device, wherein the first indication is used to indicate that the terminal device has a capability to report the buffer status information to the network device along with the second information; and
sending a second indication to the terminal device, wherein the second indication is used to indicate that the network device supports the reporting of the buffer status information to the network device along with the second information.

19. The method according to claim 18, wherein the receiving the first indication sent by the terminal device includes:

receiving a first physical uplink control channel (PUCCH) message sent by the terminal device, wherein the first PUCCH message includes the first indication;
the sending the second indication to the terminal device includes:
sending a second PUCCH message to the terminal device, wherein the second PUCCH message includes the second indication.

20. The method according to claim 17, wherein before the receiving the second information sent by the terminal device, the method further includes:
sending a third indication to the terminal device, wherein the third indication is used to indicate configuration information for transmitting the second information.

21. The method according to claim 20, wherein the sending the third indication to the terminal device includes:
sending a third physical uplink control channel (PUCCH) message to the terminal device, wherein the third PUCCH message includes the third indication.

22. The method according to claim 20, wherein the obtaining the buffer status information from the second information includes:

determining the first adjustment information based on a carrier wave of a first half-bandwidth corresponding to the second information and a carrier wave of a second half-bandwidth corresponding to the second information; and
determining the buffer status information corresponding to the first adjustment information based on a plurality of parameters in the configuration information.

23. The method according to claim 22, wherein after the determining the buffer status information corresponding to the first adjustment information based on the plurality of parameters in the configuration information, the method further includes:
allocating an uplink transmission resource to the terminal device based on the buffer status information.

24. The method according to claim 22, wherein after the determining the buffer status information corresponding to the first adjustment information based on the plurality of parameters in the configuration information, the method further includes:
demodulating the second information based on the first adjustment information to obtain third information, wherein the third information is used to indicate the reception status.

25. The method according to claim 24, wherein the demodulating the second information based on the first adjustment information to obtain the third information includes:

performing phase rotation compensation on the carrier wave of the first half-bandwidth based on the first adjustment information; and
obtaining the third information based on the carrier wave of the second half-bandwidth and the phase-rotation-compensated carrier wave of the first half-bandwidth.

26. An apparatus for reporting a buffer status configured in a terminal device, comprising:

a determination module configured to determine buffer status information to be reported;
a first generation module configured to generate first adjustment information related to first information based on the buffer status information, wherein the first information is sent by a network device to the terminal device;
a second generation module configured to generate second information based on a reception status of the first information and the first adjustment information; and
an information sending module configured to send the second information to the network device.

27. An apparatus for receiving a buffer status configured in a network device, comprising:

an information receiving module configured to receive second information sent by a terminal device, wherein the second information is generated by the terminal device based on a reception status of first information and first adjustment information when determining that there is buffer status information to be reported, the first information is sent by the network device to the terminal device, and the first adjustment information is generated by the terminal device based on the buffer status information; and
a processing module configured to obtain the buffer status information from the second information, wherein the second information is further used to indicate the reception status.

28. A communication system, comprising a terminal device and a network device;

the terminal device is configured to perform the method according to any one of claims 1 to 16, and
the network device is configured to perform the method according to any one of claims 17 to 25.

29. An electronic device, comprising a memory, a processor, and a computer program stored in the memory and executable in the processor, wherein when executing the program, the processor implements the steps of the method according to any one of claims 1 to 25.

30. A computer-readable storage medium which stores a computer program, wherein when executed by a processor, the computer program implements the steps of the method according to any one of claims 1 to 25.

There is to-be-transmitted uplink data

A terminal device determines whether there is an uplink grant for reporting the BSR

NO

The terminal device determines whether SR resources are configured

NO

Initiate a connected-state random access procedure to the network device

YES

Initiate an SR procedure to a network device

After detecting a preamble sequence, the physical layer of the network device forwards the preamble sequence to the MAC layer of the network device

After detecting the SR, a physical layer of the network device forwards the SR to an MAC layer of the network device

The network device issues an uplink grant for reporting the BSR to the terminal device

When detecting an MAC CE of a C-RNTI in a third message during the random access procedure, the network device issues an uplink grant for reporting the BSR to the terminal device

FIG. 1

FIG. 2

| | |
|---|---|
| Determining buffer status information to be reported | 30 |
| Generating first adjustment information related to first information based on the buffer status information | 31 |
| Generating second information based on a reception status of the first information and the first adjustment information | 32 |
| Sending the second information to the network device | 33 |

FIG. 3

30

Determining whether a buffer size in the buffer status information is less than a data amount threshold — 310

31

Continuing to count the buffer size — 311

Generating first adjustment information based on the buffer size — 312

32

FIG. 4

| Third information | → | Modulation | → | Frequency-domain spreading |

Phase adjustment (insertion of buffered data status information)

Phase rotation factor

Resource mapping ← Multiplication with time-domain orthogonal sequence ← 

IDFT

Second information

FIG. 5

FIG. 6

Receiving second information sent by a terminal device    — 70

Obtaining buffer status information from the second information    — 71

FIG. 7

— 70

Determining first adjustment information based on a carrier wave of a first half-bandwidth corresponding to second information and a carrier wave of a second half-bandwidth corresponding to the second information    — 710

— 71

Determining buffer status information corresponding to the first adjustment information based on a plurality of parameters in configuration information    — 711

FIG. 8

```
┌──────────────┐      ┌──────────────┐      ┌──────────────┐
│    Second    │      │  PUCCH data  │      │ Data and pilot│
│ information   │─────▶│   resource   │─────▶│  separation  │
│              │      │  extraction  │      │              │
└──────────────┘      └──────────────┘      └──────────────┘
                                                    │
                                                    ▼
┌──────────────┐                            ┌──────────────┐
│Estimated value│                           │   Channel    │
│of buffered data│                          │estimation based│◀──────┐
│   status     │                            │on pilot symbols│       │
│ information   │                           └──────────────┘        │
└──────────────┘                                    │          ┌──────────────┐
        ▲                                           ▼          │ Generation of│
        │                                                      │local spreading│
┌──────────────┐      ┌──────────────┐      ┌──────────────┐  │   sequence   │
│Estimation of │      │  Half-band   │      │              │  └──────────────┘
│phase rotation│◀─────│   merging    │◀─────│ De-spreading │◀──────┘
│   factor     │      │              │      │              │
└──────────────┘      └──────────────┘      └──────────────┘
        │                     │
        │                     ▼
        │             ┌──────────────┐      ┌──────────────┐
        └────────────▶│Phase rotation│─────▶│ OCC decoding │
                      │ compensation │      │              │
                      └──────────────┘      └──────────────┘
                                                    │
                                                    ▼
┌──────────────┐      ┌──────────────┐      ┌──────────────┐
│    Third     │      │              │      │ Time-domain  │
│ information   │◀─────│ Demodulation │◀─────│ non-coherent │
│              │      │              │      │   merging    │
└──────────────┘      └──────────────┘      └──────────────┘
```

FIG. 9

Terminal
device

Network device

S1001: Determining buffer status
information to be reported

S1002: Determining that no scheduling grant
for reporting the buffer status information to
a network device has been obtained

S1003: Generating, when determining to
feed back a reception status of first
information to the network device, first
adjustment information based on the buffer
status information

S1004: generating second information based
on the reception status of the first
information and the first adjustment
information

S1005: Second information

S1006: Determining the first adjustment
information based on a carrier wave of a first
half-bandwidth corresponding to the second
information and a carrier wave of a second
half-bandwidth corresponding to the second
information

S1007: Determining the buffer status
information corresponding to the first
adjustment information based on a
plurality of parameters in configuration
information

S1008: Allocating an uplink transmission
resource to a terminal device based on the
buffer status information

S1009: demodulating the second
information based on the first adjustment
information to obtain third information

FIG. 10

Apparatus for reporting buffer
status

Determination
module — 1101

Configuration
module — 1105

First generation
module — 1102

Second
generation
module — 1103

Information
sending module — 1104

FIG. 11

Apparatus for receiving buffer
status

Information
receiving module — 1201

Configuration
module — 1203

Processing
module — 1202

FIG. 12

Memory — 1320

Input device — 1330

Output device — 1340

Processor — 1310

FIG. 13

## INTERNATIONAL SEARCH REPORT

| International application No. |
| --- |
| **PCT/CN2024/129244** |

**A.      CLASSIFICATION OF SUBJECT MATTER**

H04W 28/14(2009.01)i

According to International Patent Classification (IPC) or to both national classification and IPC

**B.      FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNKI, DWPI, CNTXT, ENTXTC, 3GPP: 缓存, 状态, 缓冲器, 报告, 上报, 反馈, 混合自动重传请求, 调制, buffer, state, status, report, feedback, ACK, NACK, HARQ, modulat+, uplink, UL

**C.      DOCUMENTS CONSIDERED TO BE RELEVANT**

| Category* | Citation of document, with indication, where appropriate, of the relevant passages | Relevant to claim No. |
| --- | --- | --- |
| X | CN 110352582 A (LG ELECTRONICS INC.) 18 October 2019 (2019-10-18) description, paragraphs 0138-0151 and 0209-0223 | 1-30 |
| X | WO 2018080561 A1 (INTEL CORP.) 03 May 2018 (2018-05-03) description, paragraphs 0060-0131 | 1-30 |
| A | CN 111954310 A (ASUSTEK COMPUTER INC.) 17 November 2020 (2020-11-17) entire document | 1-30 |
| A | US 2024204922 A1 (NOKIA TECHNOLOGIES OY) 20 June 2024 (2024-06-20) entire document | 1-30 |
| A | MEDIATEK INC. "Allow Sending Rel-14 AS RAI when no UL Grant" *3GPP TSG-WG2 Meeting #110. R2-2004828.* 12 June 2020 (2020-06-12), entire document | 1-30 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 March 2025** | **20 March 2025** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/129244**

| Patent document cited in search report | | | Publication date (day/month/year) | Patent family member(s) | | | Publication date (day/month/year) |
|---|---|---|---|---|---|---|---|
| CN | 110352582 | A | 18 October 2019 | KR | 20190018768 | A | 25 February 2019 |
| | | | | WO | 2018174450 | A1 | 27 September 2018 |
| | | | | US | 2020008227 | A1 | 02 January 2020 |
| | | | | EP | 3471322 | A1 | 17 April 2019 |
| | | | | KR | 20180135866 | A | 21 December 2018 |
| | | | | JP | 2019530382 | A | 17 October 2019 |
| WO | 2018080561 | A1 | 03 May 2018 | | None | | |
| CN | 111954310 | A | 17 November 2020 | KR | 20230007570 | A | 12 January 2023 |
| | | | | KR | 20200133186 | A | 26 November 2020 |
| | | | | US | 2020367095 | A1 | 19 November 2020 |
| | | | | US | 2021345164 | A1 | 04 November 2021 |
| US | 2024204922 | A1 | 20 June 2024 | WO | 2022241653 | A1 | 24 November 2022 |
| | | | | CN | 117480846 | A | 30 January 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410871331